# EUROPÄISCHE PATENTSCHRIFT

(11) **EP 0 899 282 B1**
(45) Veröffentlichungstag und Bekanntmachung des Hinweises auf die Patenterteilung: **08.05.2002**
(21) Anmeldenummer: 98115241.6
(22) Anmeldetag: 13.08.1998
(51) Int. Cl.: C08G 18/08, C08J 3/03, C09D 175/04

(54) **Verfahren zur Herstellung eines wässrigen Beschichtungsmittels für Einbrennlackierungen.**
Preparation of aqueous coating composition for stoving lacquers
Preparation de compositions aqueuses de revêtements pour vernis à cuire

(30) Priorität: 25.08.1997 DE 19736920
(43) Veröffentlichungstag der Anmeldung: 03.03.1999
(73) Patentinhaber: BAYER AG, 51368 Leverkusen (DE)
(72) Erfinder: Wamprecht, Christian, Dr., 41472 Neuss (DE); Kahl, Lothar, Dr., FRACC Atizapan de Zaragoza (MX); Klinksiek, Bernd, 51429 Bergisch Gladbach (DE); Yuva, Nusret, 42929 Wermelskirchen (DE)

(56) Entgegenhaltungen:
- EP-A- 0 576 952
- EP-A- 0 802 210
- EP-A- 0 805 171
- EP-A- 0 863 173

## Beschreibung

Die Erfindung betrifft ein Verfahren zur Herstellung wäßriges Beschichtungsmittel, bestehend aus Hydroxylgruppen aufweisenden Polyolen und blockierten Polyisocyanat-Vernetzern, das auf der zu beschichtenden Oberfläche vorzugsweise pulverförmig auftrocknet und nach Einbrennen Lacke mit hoher Wasser-, Chemikalien- und Lösemittelresistenz, insbesondere auf metallischen Substraten ergibt.

Wäßrige Polyurethandispersionen sind bekannt (vgl. z.B. Houben-Weyl, Methoden der organischen Chemie, 4. Auflage, Band E20, S. 1659 (1987)). Für höhere Qualitätsanforderungen, wie sie z.B. bei der Automobillackierung bestehen, zeigen aber nichtreaktive Polyurethane verschiedene Schwächen. Wesentlicher Grund ist die fehlende Vernetzung zwischen den filmbildenden Makromolekülen, die sich in abgeschwächter Wasser-, Chemikalien- und Lösemittelbeständigkeit sowie geringwertigen mechanischen Eigenschaften äußern. Bessere Eigenschaften liefern die neueren nachvernetzten Beschichtungssysteme, wie sie beispielsweise durch Kombination von isocyanatreaktiven Harzen mit blockierten Polyisocyanatvernetzern erhalten werden (vgl. J.W. Rosthauser, K. Nachtkamp in Advances in Urethane Science and Technology, K.C. Frisch and D. Klempner, Editors, Vol. 10, S. 121-162 (1987)).

Als Harze werden Polyurethan-, Polyepoxid-, Polyester- oder Polyacrylatharze bzw. Dispersionen eingesetzt, die über Hydroxylgruppen vernetzbar sind. Vernetzer sind blockierte Polyisocyanate, die gegebenenfalls hydrophil modifiziert wurden. Solche Systeme sind z.B. aus DE-A 4 213 527, EP-A 581 211, EP-A 427 028, US 4 543 144, DE-A 3 345 448 und DE-A 2 829 648 bekannt.

Die für Lack- und Beschichtungsanwendungen in Frage kommenden Systeme haben die Eigenschaft, bereits bei Raumtemperatur gute Filmbildungseigenschaften zu zeigen. Ist diese Eigenschaft nicht gegeben, so ergeben sich Filme mit insgesamt schlechtem Qualitätsniveau. Hier sind insbesondere schlechterer Lackverlauf und geringerer Glanz zu nennen. Teilweise wird auch die Filmbildung durch Zusatz von Löse- und Koaleszenzmitteln gefördert.

Die Applikation von Pulverlacken aus wäßriger Phase wird z.B. beschrieben in DE-A 19 523 084, DE-A 19 540 977, EP-A 652 264, EP-A 714 958 und WO 96/37561. Nachteilig ist, daß sich bei der Herstellung an die Extrusion des Bindemittels ein Mahlvorgang anschließt, der sehr aufwendig und mit hohen Kosten verbunden ist. Außerdem sind der Feinteiligkeit der Pulver bei einem Mahlvorgang Grenzen gesetzt, was sich oft in einer nicht ausreichenden Sedimentationsstabilität der damit hergestellten Pulver-Suspensionen bemerkbar macht.

Wie jetzt überraschenderweise gefunden wurde, gelingt es, wertvolle lösemittelfreie, pulverförmig auftrocknende, hitzehärtbare Lack-Dispersionen auf Basis von ausgewählten Polyhydroxylkomponenten und blockierten Polyisocyanaten auf wirtschaftliche Weise zu erhalten. Die dabei resultierenden Produkte stellen wertvolle einkomponentig zu verarbeitende Beschichtungsmittel dar und ermöglichen die Herstellung von Beschichtungen mit besonders hochwertigen Eigenschaften. Hervorzuheben ist, daß keine oder nur sehr geringe Mengen an organischem Colösemittel in dem Beschichtungssystem vorhanden sind und daß sehr gut verlaufende, hochglänzende Lackfilme mit sehr guten Wasser-, Lösemittel- und Chemikalienbeständigkeiten erhalten werden.

Vorteilhaft ist weiterhin, daß, obwohl es sich um pulverförmig auftrocknende Bindemittel handelt, erfindungsgemäß hergestellte Lacke auf bestehenden Naß-Lackieranlagen verarbeitet werden können. Es werden dünnere Schichten mit gutem Verlauf als bei der herkömmlichen Pulverlackierung erhalten und Reinigungsvorgänge sind verglichen mit der Pulverlackierung durch Ausspritzen der Geräte und Kabinen vereinfacht. Auch im Vergleich zu lösemittelhaltigen Lackierungen ist der Reinigungsaufwand geringer, weil keine Filmbildung bzw. im Vergleich zu Zweikomponentenlacken keine Vernetzung bei Raumtemperatur auftritt.

Herkömmliche bekannte Wasserlacksysteme, die bereits bei Raumtemperatur filmbildend sind, benötigen zu ihrer Herstellung entweder beträchtliche Mengen an nichtionischen Emulgatoren oder weisen einen hohen Gehalt an Carboxylgruppen auf, die mit Ammoniak oder Aminen neutralisiert sind (ionische Emulgatoren). Dies führt häufig zur Bildung von Mikroblasen bei der Herstellung und Applikation der Lacke und ist darüber hinaus auch der Grund für die oft schlechte Wasserbeständigkeit entsprechender Lackfilme. Außerdem haben diese Lacksysteme oft nur ein enges Applikationsfenster (Bereich von Temperatur und relativer Luftfeuchte bei der Anwendung) und zeigen deutliche Neigung zur Blasenbildung (Kocherbildung). Dies ist bei vorzugsweise pulverförmig auftrocknenden Bindemitteln deutlich günstiger. Die Oberflächeneigenschaften sind weniger von den Klimabedingungen (Temperatur, rel. Luftfeuchte) während der Applikation abhängig. Ferner können größere Schichtstärken ohne Kocherbildung, bedingt durch Verdunsten des Wassers, erreicht werden.

Gegenstand der Erfindung ist ein Verfahren zur Herstellung eines wäßriges Beschichtungsmittels hergestellt durch Kombination
A) einer Polyolkomponente auf Basis von Polyesterpolyolen, Polyacrylatpolyolen und/oder Polyesterpolyacrylatpolyolen mit einem Hydroxylgruppengehalt von 1,0 bis 6,0 Gew.-%, einem Carboxylgruppengehalt von 0 bis 1,5 Gew.-%, einem gewichtsgemittelten Molekulargewicht von 2000 bis 50000 und einer Glasübergangstemperatur ≥30°C,
B) einer Polyisocyanatkomponente mit blockierten Isocyanatgruppen auf Basis von (cyclo)aliphatischen Polyisocyanaten mit einem Gehalt an blockierten Isocyanatgruppen von 10,0 bis 25,0 Gew.-%,
C) gegebenenfalls weiteren polyfunktionellen Polyolen,
D) gegebenenfalls weiteren Vernetzersubstanzen,
E) gegebenenfalls externen Emulgatoren und
F) gegebenenfalls üblichen Zusatzmitteln, wie z.B. Neutralisationsmittel, Katalysatoren, Hilfsstoffe und/oder Additive, wie Entgasungsmittel, Verlaufsmittel, Radikalfänger, Antioxidantien und/oder UV-Absorber, Verdicker, geringe Anteile an Lösemitteln und Bioziden,
in wäßriger Dispersion entweder nach einem Direktdispergierverfahren oder nach dem Phasenumkehrverfahren mittels einer Dispergiervorrichtung mit einer volumenbezogenen Dispergierleistung von 1 x 10 bis 9,8 x 10000 W/cm³.

Die erfindungsgemäßen Bindemittel haben in der Dispersion eine mittlere Teilchengröße der Dispersionspartikel von 0,05 bis 10 µm, vorzugsweise 0,1 bis 5 µm, insbesondere bei 0,15 bis 2,5 µm und besonders bevorzugt 0,2 bis 1,5 µm Teilchendurchmesser.

Gegenstand der Erfindung ist die Herstellung der erfindungsgemäßen Beschichtungsmittel, dadurch gekennzeichnet, daß
A) eine Polyolkomponente auf Basis von Polyesterpolyolen, Polyacrylatpolyolen und/oder Polyesterpolyacrylatpolyolen mit einem Hydroxylgruppengehalt von 1,0 bis 6,0 Gew.-%, einem Carboxylgruppengehalt von 0 bis 1,5 Gew.-%, einem gewichtsgemittelten Molekulargewicht von 2000 bis 50000 und einer Glasübergangstemperatur ≥30°C,
B) eine Polyisocyanatkomponente mit blockierten Isocyanatgruppen auf Basis von (cyclo)aliphatischen Polyisocyanaten mit einem Gehalt an blockierten Isocyanatgruppen von 10,0 bis 25,0 Gew.-%,
C) gegebenenfalls weitere polyfunktionelle Polyole,
D) gegebenenfalls weitere Vernetzersubstanzen,
E) gegebenenfalls externe Emulgatoren und
F) gegebenenfalls übliche Zusatzmittel, wie z.B. Neutralisationsmittel, Katalysatoren, Hilfsstoffe und/oder Additive, wie Entgasungsmittel, Verlaufsmittel, Radikalfänger, Antioxidantien und/oder UV-Absorber, Verdicker, geringe Anteile an Lösemitteln und Bioziden,
in wäßriger Dispersion entweder nach einem Direktdispergierverfahren oder nach dem Phasenumkehrverfahren mittels einer Dispergiervorrichtung mit einer volumenbezogenen Dispergierleistung von 1 x 10 bis 9,8 x 10000 W/cm³ miteinander kombiniert werden.

Für die erfindungsgemäße Herstellung der vorzugsweise als Pulver auftrocknenden erfindungswesentlichen Dispersionen durch Dispergierprozesse gelangen Dispergiervorrichtungen mit hoher volumenbezogener Dispergierleistung, wie z.B. Druckentspannungshomogenisierdüsen, zur Anwendung.

Dispergiermaschinen sind z.B. aus Formation of Emulsions, in P. Beche, Encyclopedia of Emulsion Technology, Vol. 1, New York, Basel, Decker 1983; bekannt, wurden aber zur Herstellung von pulverförmig auftrocknenden wäßrigen Dispersionen bisher noch nicht eingesetzt. Der Leistungsbereich der Dispergiermaschine beträgt erfindungsgemäß 1 x 10 bis 9,8 x 10000 W/cm³, vorzugsweise 1 x 10 bis 1 x 10000 W/cm³, besonders bevorzugt 1 x 10 bis 1 x 1000 W/cm³.

Dispergiermaschinen werden nach der Größe der volumenbezogenen Leistung ausgewählt. Zur Herstellung von feinteiligen Dispersionen (ca. 1 µm Teilchendurchmesser) sind Dispergiermaschinen mit hohen volumenbezogenen Leistungen erforderlich, z.B. Hochdruckhomogenisatoren. Mit Rotor/Stator-Maschinen lassen sich so feinteilige Dispersionen nicht mehr gut herstellen. Bei dem in der EP-A 0 101 007 beschriebenen Strahldispergator handelt es sich um eine spezielle Druckentspannungsdüse, die einen wesentlich höheren Wirkungsgrad als Hochdruckhomogenisatoren hat. Schon bei 50 bar Homogenisierdruck werden mit dem Strahldispergator Partikelgrößenverteilungen erreicht, für die man bei dem Hochdruckhomogenisator 200 bar benötigt.

Mit dem Strahldispergator als Dispergiervorrichtung lassen sich besonders vorteilhaft feinteilige Dispersionen, sowohl kontinuierlich als auch diskontinuierlich herstellen.

Erfindungsgemäß kann auch die wäßrige Dispersion durch Phasenumkehr von einer Wasser-in-Öl in eine Öl-in-Wasser-Emulsion überführt werden.

Die erfindungsgemäß hergestellten, erfindungswesentlichen wäßrigen Beschichtungsmittel können zur Einbrennlackierung auf beliebigen, hitzeresistenten Substraten verwendet werden, z.B. als Klarlack oder als pigmentierter Lack zur Herstellung von Einschicht- und Mehrschichtlackierungen, z.B. auf dem Kraftfahrzeugsektor.

Die Polyolkomponente A) des erfindungswesentlichen Beschichtungsmittels besteht aus
a) 0 bis 100 Gew.-Teilen einer Polyesterkomponente, bestehend aus mindestens einem Polyesterpolyol mit einer Hydroxylzahl von 20 bis 240 mg KOH/g bei einer Säurezahl von <12 mg KOH/g und einer Glasübergangstemperatur von -40 bis +100°C,
b) 0 bis 15 Gew.-Teilen einer olefinisch ungesättigten Esterkomponente, bestehend aus mindestens einem Maleinsäuredi(cyclo)alkylester mit 1 bis 12 Kohlenstoffatomen im (Cyclo)alkylrest,
c) 0 bis 70 Gew.-Teilen (Cyclo)alkylester der Acryl- und/oder Methacrylsäure mit 1 bis 18 Kohlenstoffatomen im (Cyclo)alkylrest,
d) 0 bis 50 Gew.-Teilen aromatischen, olefinisch ungesättigten Monomeren,
e) 0 bis 50 Gew.-Teilen Hydroxyalkylester der Acryl- und/oder Methacrylsäure mit 2 bis 6 Kohlenstoffatomen im Hydroxyalkylrest und/oder deren Umsetzungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können,
f) 0 bis 5 Gew.-Teilen olefinisch ungesättigten Carbonsäuren und
g) 0 bis 30 Gew.-Teilen weiteren copolymerisierbaren, olefinisch ungesättigten Verbindungen,
wobei die Summe der Gew.-Teile der Komponenten a) bis g) 100 ergibt.

Die Polyolkomponente A) weist einen Hydroxylgruppengehalt von 1 bis 6 Gew.-%, vorzugsweise 1,5 bis 5,5 Gew.-% und besonders bevorzugt 2 bis 5 Gew.-% auf. Der Gehalt an Carboxylgruppen liegt bei 0 bis 1,5 Gew.-%, vorzugsweise 0,1 bis 1,4 Gew.-% und besonders bevorzugt 0,2 bis 1,3 Gew.-%. Das mittels Gelpermeationschromatographie bestimmbare Molekulargewicht (Gewichtsmittel, Standard Polystyrol) liegt bei 2000 bis 50000, vorzugsweise 2500 bis 40000 und besonders bevorzugt 3000 bis 35000. Die Glasübergangstemperatur nach der Differentialthermoanalyse (DTA) liegt bei ≥30°C, vorzugsweise bei 30 bis 100°C und besonders bevorzugt bei 30 bis 80°C.

Bevorzugt besteht die Polyolkomponente A) aus
a) 0 bis 60 Gew.-Teilen einer Polyesterkomponente, bestehend aus mindestens einem Polyesterpolyol mit einer Hydroxylzahl von 30 bis 200 mg KOH/g bei einer Säurezahl von <10 mg KOH/g und einer Glasübergangstemperatur von -30 bis +70°C,
b) 0 bis 12,5 Gew.-Teilen einer olefinisch ungesättigten Esterkomponente, bestehend aus mindestens einem Maleinsäuredi(cyclo)alkylester mit 1 bis 6 Kohlenstoffatomen im (Cyclo)alkylrest,
c) 5 bis 65 Gew.-Teilen (Cyclo)alkylester der Acryl- und/oder Methacrylsäure mit 1 bis 12 Kohlenstoffatomen im (Cyclo)alkylrest,
d) 0 bis 45 Gew.-Teilen Styrol, α-Methylstyrol und/oder Vinyltoluol,
e) 5 bis 45 Gew.-Teilen Hydroxyalkylester der Acryl- und/oder Methacrylsäure mit 2 bis 4 Kohlenstoffatomen im Hydroxyalkylrest und/oder deren Umsetzungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können,
f) 0 bis 4 Gew.-Teilen Acrylsäure, Methacrylsäure, Maleinsäure, Fumarsäure und/oder Malein- bzw. Fumarsäurehalbester mit 1 bis 8 Kohlenstoffatomen im Alkoholrest,
g) 0 bis 25 Gew.-Teilen weiteren copolymerisierbaren, olefinisch ungesättigten Verbindungen,
wobei die Summe der Gew.-Teile der Komponenten a) bis g) 100 ergibt.

Besonders bevorzugt besteht die Komponente A) aus
a) 0 bis 40 Gew.-Teilen einer Polyesterkomponente, bestehend aus mindestens einem Polyesterpolyol mit einer Hydroxylzahl von 40 bis 160 mg KOH/g bei einer Säurezahl von <8 mg KOH/g und einer Glasübergangstemperatur von -30 bis +60°C,
b) 1 bis 10 Gew.-Teilen Maleinsäuredimethylester, Maleinsäurediethylester, Maleinsäuredibutylester oder Gemische dieser Monomeren,
c) 10 bis 60 Gew.-Teilen (Cyclo)alkylester der Acryl- und/oder Methacrylsäure mit 1 bis 9 Kohlenstoffatomen im (Cyclo)alkylrest,
d) 5 bis 45 Gew.-Teilen Styrol,
e) 10 bis 42,5 Gew.-Teilen Hydroxyethylacrylat, Hydroxyethylmethacrylat, Hydroxypropylacrylat, Hydroxypropylmethacrylat, Hydroxybutylacrylat und/oder Hydroxybutylmethacrylat und
f) 0,5 bis 4 Gew.-Teilen Acrylsäure und/oder Methacrylsäure,
wobei die Summe der Komponenten a) bis f) 100 ergibt.

Bei der Polyesterkomponente a) handelt es sich um mindestens einen hydroxyfunktionellen Polyester mit einer Hydroxylzahl von 20 bis 240 mg KOH/g, vorzugsweise 30 bis 200 mg KOH/g und besonders bevorzugt 40 bis 160 mg KOH/g. Die Säurezahl liegt unter 12 mg KOH/g, vorzugsweise unter 10 mg KOH/g und besonders bevorzugt unter 8 mg KOH/g. Die Glasübergangstemperatur der Polyesterkomponente a) liegt bei -40 bis +100°C, vorzugsweise -30 bis +80°C und besonders bevorzugt -30 bis +60°C. Das aus der Stöchiometrie der eingesetzten Ausgangsmaterialien berechenbare Molekulargewicht der Polyesterpolyole liegt bei ca. 460 bis 11300 g/mol, vorzugsweise bei ca. 570 bis 7500 g/mol und besonders bevorzugt bei ca. 700 bis 5700 g/mol. Bei der Herstellung der hydroxyfunktionellen Polyester können insgesamt 6 Gruppen von Monomerbestandteilen zur Anwendung kommen:
1) (Cyclo)alkandiole (d.h. zweiwertige Alkohole mit (cyclo)aliphatisch gebundenen Hydroxylgruppen) des Molekulargewichtsbereichs 62 bis 286, wie z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butyl-propandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem maximalen Molekulargewicht von ca. 2000, vorzugsweise ca. 1000 und besonders bevorzugt ca. 500. Umsetzungsprodukte der zuvor genannten Diole mit ε-Caprolacton können ebenfalls als Diole zum Einsatz gelangen,
2) drei- und höherwertige Alkohole des Molekulargewichtsbereichs 92 bis 254, wie z.B. Glycerin, Trimethylolpropan, Pentaerythrit, Dipentaerythrit und Sorbit, Umsetzungsprodukte dieser Alkohole mit Ethylenoxid und/oder Propylenoxid bzw. mit ε-Caprolacton bis zu einem maximalen Molekulargewicht von ca. 2000, vorzugsweise ca. 1000.
3) Monoalkohole wie z.B. Ethanol, 1- und 2-Propanol, 1- und 2-Butanol, 1-Hexanol, Cyclohexanol und Benzylalkohol, Umsetzungsprodukte dieser Alkohole mit Ethylenoxid und/oder Propylenoxid bzw. mit ε-Caprolacton bis zu einem maximalen Molekulargewicht von ca. 2000, vorzugsweise ca. 1000 und besonders bevorzugt ca. 500.
4) Dicarbonsäuren des Molekulargewichtsbereichs 116 bis ca. 600 und/oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Maleinsäureanhydrid, Fumarsäure, Bernsteinsäure, Bernsteinsäureanhydrid, Adipinsäure, Dodecandisäure, hydrierte Dimerfettsäuren,
5) höherfunktionelle Carbonsäuren bzw. deren Anhydride wie z.B. Trimellithsäure und Trimellithsäureanhydrid und
6) Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.

Bei der Herstellung der Polyester a) können jeweils beliebige Gemische der Monomerbestandteile 1) bis 6) zum Einsatz kommen, mit der Maßgabe, daß die Auswahl so erfolgt, daß die resultierenden Polyester sowohl OH-Zahlen im Bereich von 20 bis 240 mg KOH/g bei Säurezahlen von <12 mg KOH/g als auch Glasübergangstemperaturen von -40 bis +100°C aufweisen.

Diese Bedingung wird dann erfüllt, wenn bei der Herstellung der Polyester ein geeignetes Verhältnis von "weichmachenden" Monomerbestandteilen, die zur Erniedrigung der Glasübergangstemperatur der Polyester führen, zu "hartmachenden" Monomeren, die zur Erhöhung der Glasübergangstemperatur führen, zur Anwendung kommt.

"Weichmachende" Monomerbestandteile sind beispielsweise aliphatische Diole, wie z.B. 1,4-Butandiol, 1,5-Pentandiol und 1,6-Hexandiol oder aliphatische Dicarbonsäuren, wie z.B. Adipinsäure oder Dodecandisäure.

"Hartmachende" Monomerbestandteile sind beispielsweise cyclische aromatische Dicarbonsäuren, wie z.B. Phthalsäure, Isophthalsäure und Terephthalsäure oder Diole, wie z.B. Cyclohexandiol-1,4, Cyclohexan-1,4-dimethanol oder Neopentylglykol.

Die Herstellung der Polyester a) erfolgt in an sich bekannter Weise nach Methoden, wie sie beispielsweise in "Ullmanns Encyclopädie der technischen Chemie", Verlag Chemie Weinheim, 4. Auflage (1980), Band 19, Seiten 61 ff. oder H. Wagner und H.F. Sarx in "Lackkunstharze", Carl Hanser Verlag, München (1971), Seiten 86 bis 152, ausführlich beschrieben sind. Die Veresterung erfolgt gegebenenfalls in Gegenwart einer katalytischen Menge eines üblichen Veresterungskatalysators, wie beispielsweise Säuren wie z.B. p-Toluolsulfonsäure, Basen, wie z.B. Lithiumhydroxid oder Übergangsmetallverbindungen, wie z.B. Titantetrabutylat, bei ca. 80 bis 260°C, vorzugsweise 100 bis 240°C.

Die Veresterungsreaktion wird so lange durchgeführt, bis die angestrebten Werte für die Hydroxyl- und Säurezahl erreicht sind. Das Molekulargewicht der Polyesterpolyole kann aus der Stöchiometrie der Ausgangsmaterialien (unter Berücksichtigung der resultierenden Hydroxyl- und Säurezahlen) berechnet werden.

Die Komponente b) besteht aus mindestens einem Maleinsäuredi(cyclo)alkylester mit 1 bis 12, vorzugsweise 1 bis 8 und besonders bevorzugt 1 bis 4 Kohlenstoffatomen im (Cyclo)alkylrest. Geeignet sind z.B. Maleinsäuredimethylester, Maleinsäurediethylester, Maleinsäuredi-n-butylester, Maleinsäuredi-2-ethylhexylester, Maleinsäuredi-ndecylester, Maleinsäuredi-n-dodecylester und Maleinsäuredicyclohexylester.

Die Komponente c) besteht aus mindestens einem (Cyclo)alkylester der Acryl- und/oder Methacrylsäure mit 1 bis 18, vorzugsweise 1 bis 12 und besonders bevorzugt 1 bis 9 Kohlenstoffatomen im (Cyclo)alkylrest, wie z.B. Methyl(meth)acrylat, Ethyl(meth)acrylat, Propyl(meth)acrylat, Isopropyl(meth)acrylat, n-Butyl(meth)acrylat, Isobutyl(meth)acrylat, tert.-Butyl(meth)acrylat, Cyclohexyl(meth)acrylat, 2-Ethylhexyl(meth)acrylat, Isobornyl(meth)acrylat, 3,3,5-Trimethylcyclohexyl(meth)acrylat, Stearyl(meth)acrylat und Benzyl(meth)acrylat.

Die Komponente d) besteht aus mindestens einem aromatischen, olefinisch ungesättigten Monomeren, wie z.B. Styrol, α-Methylstyrol und Vinyltoluol. Styrol ist bevorzugt.

Die Komponente e) besteht aus mindestens einem Hydroxyalkylester der Acryl- und/oder Methacrylsäure mit 2 bis 6 Kohlenstoffatomen im Hydroxyalkylrest und/oder deren Umsetzungsprodukte eines maximalen Molekulargewichts von 500 mit s-Caprolacton sowie Additionsprodukten von Acryl- und/oder Methacrylsäure und Monoepoxidverbindungen, die auch während der radikalischen Polymerisation in situ erzeugt werden können. Eingesetzt werden können z.B. Hydroxyethyl(meth)acrylat, Hydroxypropyl(meth)acrylat (bei der Anlagerung von Propylenoxid an (Meth)acrylsäure entstehendes Isomerengemisch), Hydroxybutyl(meth)acrylat, Umsetzungsprodukte dieser Monomeren mit ε-Caprolacton bis zu einem maximalen Molekulargewicht von 500. Der Begriff "Hydroxyalkylester" soll somit auch Estergruppen aufweisende Reste umfassen, wie sie durch Anlagerung von ε-Caprolacton an einfache Hydroxyalkylester entstehen. Weiterhin sind auch Umsetzungsprodukte von Acryl- und/oder Methacrylsäure mit Monoepoxidverbindungen, die zusätzlich noch OH-Gruppen tragen können, als "Hydroxyalkylester der (Meth)acrylsäure" anzusehen und daher ebenfalls als Monomere e) geeignet. Beispiele für geeignete Monoepoxide sind ®Cardura E10 (Shell), 2-Ethylhexylglycidylether und Glycidol (1,2-Epoxy-3-propanol). Diese Umsetzungsprodukte können auch unter den Reaktionsbedingungen der radikalischen Polymerisation in situ erzeugt werden.

Die Komponente f) besteht aus mindestens einer olefinisch ungesättigten Carbonsäure, wie z.B. Acrylsäure, Methacrylsäure, Maleinsäure, Fumarsäure, Maleinsäure- und/oder Fumarsäurehalbester mit 1 bis 18 Kohlenstoffatomen im Alkoholrest, bevorzugt sind Acryl- und Methacrylsäure.

Die Komponente g) besteht aus copolymerisierbaren, olefinisch ungesättigten Verbindungen, die von den Verbindungsklassen der Komponenten a) bis f) verschieden sind, wie beispielsweise α-Olefine, wie z.B. 1-Octen oder 1-Decen; Vinylester, wie z.B. Vinylacetat, Vinylpropionat, Vinylbutyrat, ®VeoVa 9 und ®VeoVa 10 von Shell; andere Vinylverbindungen, wie z.B. N-Vinylpyrrolidon, N-Vinylcaprolactam und N-Vinylcarbazol.

Die Herstellung der Polyolkomponente A) erfolgt durch radikalische Polymerisation der Komponenten b) bis g) entweder in einem inerten organischen Lösemittel oder lösemittelfrei in Substanz. Die Komponente a) wird, falls erforderlich, zweckmäßigerweise vorgelegt, kann aber auch als Mischung mit den Monomerkomponenten b) bis g) bei der radikalischen Polymerisation zum Einsatz kommen. Es ist aber auch möglich, die Komponente a) nach der Polymerisation der Komponenten b) bis g) dem entstandenen fertigen Polymerisat zuzumischen. Bei der Herstellung der Polyolkomponente A) können als Einsatzstoffe a) bis g) innerhalb der oben angegebenen Mengenanteilsgrenzen jeweils beliebige Gemische verwendet werden, mit der Maßgabe, daß diese Auswahl so erfolgt, daß die resultierenden Polyolbindemittel Hydroxylzahlen und Glasübergangstemperaturen innerhalb der obengenannten Bereiche aufweisen.

Diese für die erfindungsgemäße Verwendbarkeit der Polyole wesentliche Bedingungen wird dann erfüllt, wenn bei der Herstellung der Copolymerisate ein geeignetes Verhältnis von "weichmachenden" Monomeren, die zur Erniedrigung der Glasübergangstemperatur führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z.B. Ethylacrylat, n-Butylacrylat, Isobutylacrylat und 2-Ethylhexylacrylat.

"Hartmachende" Monomere sind beispielsweise kurzkettige (Cyclo)alkylester der Methacrylsäure, wie z.B. Methylmethacrylat, Ethylmethacrylat, Isopropylmethacrylat, Isobutylmethacrylat, tert.-Butylmethacrylat, Cyclohexylmethacrylat, Neopentylmethacrylat, Isobornylmethacrylat und 3,3,5-Trimethylcyclohexylmethacrylat; Vinylaromaten, wie z.B. Styrol, Vinyltoluol und α-Methylstyrol.

Geeignete Initiatoren zur Durchführung der radikalischen Polymerisation sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid, Di-tert.-butylperoxid oder Di-tert.-amylperoxid.

Geeignete Lösemittel zur Herstellung der Polyolkomponente A) sind z.B. solche Lösemittel, die nach dem Emulgierschritt durch Vakuumdestillation aus der wäßrigen Phase einer Dispersion entfernt werden können und vorzugsweise gegenüber Isocyanatgruppen inert sind. Beispielhaft genannt seien Ketone wie Aceton und Methylethylketon und Ester wie Ethylacetat und Butylacetat.

Bei der Herstellung der Polyolbindemittel A) werden in einem Polymerisationsreaktor ein Reaktionsmedium für die radikalische Polymerisation vorgelegt und auf die gewünschte Polymerisationstemperatur aufgeheizt. Als Polymerisationsmedium kann z.B. ein Lösemittel bzw. eine Mischung der oben angegebenen Lösemittel dienen, falls zur Verwendung vorgesehen die Polyesterkomponente oder auch die Komponente b). Es ist auch möglich, beliebige Kombinationen aus Lösemittel und den Komponenten a) und/ober b) als Reaktionsmedium einzusetzen. Nachdem die gewünschte Polymerisationstemperatur erreicht ist, wird die Monomermischung, bestehend aus den Komponenten c) bis g) und gegebenenfalls a) und/oder b) sowie der Radikalinitiator, vorzugsweise gleichzeitig beginnend, dem Reaktionsmedium zudosiert. Dabei werden die olefinisch ungesättigten Bestandteile der Monomermischung radikalisch copolymerisiert, wobei gegebenenfalls eingesetzter Polyester a) durch Pfropfreaktionen, die unter den Reaktionsbedingungen mehr oder weniger stattfinden können, mit dem Copolymerisat chemisch verbunden werden kann. Die Polyesterkomponente a) weist vorzugsweise keine ungesättigten Doppelbindungen auf. Um jedoch spezielle Produkteigenschaften zu erzielen, kann es aber auch angezeigt sein, Polyester einzusetzen, die polymerisierbare Doppelbindungen aufweisen und somit Copolymerisationsreaktionen bzw. Pfropfreaktionen eingehen können.

Die Polymerisationstemperatur liegt bei 80 bis 220°C, vorzugsweise bei 90 bis 200°C und besonders bevorzugt bei 120 bis 180°C.

Zur Regelung des Molekulargewichtes der Polyolbindemittel können übliche Regler bei der Durchführung der Polymeriation eingesetzt werden. Beispielhaft genannt seien als Regler Mercaptane, wie z.B. tert.-Dodecylmercaptan, n-Dodecylmercaptan und Mercaptoethanol.

Im allgemeinen erfolgt die Polymerisation, insbesondere bei Mitverwendung von Lösemitteln der oben angegebenen Art, in einem geschlossenen Druckpolymerisationsreaktor mit automatischer Temperatursteuerung bei einem Druck von bis zu 20 bar. Bei lösemittelfreier Fahrweise und Verwendung von hochsiedenden Monomerbestandteilen, die keinen Rückfluß unterhalb der gewählten Polymerisationstemperatur hervorrufen, kann die Polymerisation auch unter Atmosphärendruck durchgeführt werden.

Die nach dem beschriebenen Polymerisationsverfahren erhaltenen Polyolbindemittel A) stellen wertvolle Bindemittelkomponenten zur Herstellung der erfindungsgemäßen wäßrigen Pulversuspensionen dar und bilden den wesentlichen Polyolbestandteil, gegebenenfalls neben weiteren Hydroxylgruppen aufweisenden Komponenten, wie z.B. anderen Polyestern, Polyethern, Polyacrylaten, Polycarbonaten und/oder Polyurethanen, die in untergeordneten Anteilen bei Bedarf neben der Polyolkomponente A) eingesetzt werden können.

Bei der Komponente B) handelt es sich hauptsächlich um blockierte (cyclo)aliphatische Isocyanuratgruppen und gegebenenfalls Iminooxadiazindiongruppen und/oder Biuretgruppen enthaltende, sowie gegebenenfalls Urethan- und/oder Allophanatgruppen aufweisende Polyisocyanate. Zur Herstellung der Polyisocyanate können die bekannten (cyclo)aliphatischen Diisocyanate eingesetzt werden. Vorzugsweise finden Verwendung 1,6-Diisocyanatohexan (HDI), 1-Isocyanato-3,3,5-trimethyl-5-isocyanatomethyl-cyclohexan (Isophorondiisocyanat, IPDI), 2,4- und/oder 2,6-Diisocyanato-1-methyl-cyclohexan und 4,4'-Diisocyanatodicyclohexylmethan (®Desmodur W, Bayer AG). Besonders bevorzugt werden zur Herstellung der Komponente B) Isocyanuratgruppen bzw. Isocyanurat- und Iminooxadiazindiongruppen aufweisende Polyisocyanate auf Basis von 1,6-Hexamethylendiisocyanat, Isophorondiisocyanat und ®Desmodur W eingesetzt.

Als weiteres höherfunktionelles Polyisocyanat, das außer den Isocyanatgruppen keine fünktionellen Gruppierungen aufweist, kann 4-Isocyanatomethyl-octan-1,8-diisocyanat zur Herstellung der Komponente B) eingesetzt werden.

Zur Herstellung der Polyisocyanatkomponente B) werden die obengenannten Polyisocyanate mit üblichen Blockierungsmitteln in einer an sich bekannten Blockierungsreaktion blockiert und gegebenenfalls hydrophil modifiziert.

Als Blockierungsmittel werden die bekannten monofünktionellen Blockierungsmittel eingesetzt, wie z.B. Malonsäurediethylester, Acetessigester, ε-Caprolactam, Butanonoxim, Cyclohexanonoxim, 1,2,4-Triazol, Dimethyl-1,2,4-triazol, 3,5-Dimethylpyrazol oder Imidazol. Bevorzugt eingesetzt werden Blockierungsmittel, die im Temperaturbereich bis 160°C, besonders bevorzugt bis 150°C abspalten. Bevorzugt sind Butanonoxim, Cyclohexanonoxim und 3,5-Dimethylpyrazol, besonders bevorzugt ist 3,5-Dimethylpyrazol.

Falls die Polyisocyanatkomponente hydrophil modifiziert wird, geschieht dies nach an sich bekannten Methoden, d.h. indem ein Teil der Isocyanatgruppen mit Hydroxycarbonsäuren, z.B. 2,2-Dimethylolpropionsäure oder 3-Hydroxy-2,2-dimethylpropansäure (Hydroxypivalinsäure) und/oder mit monofunktionellen Polyethern mit einem Gehalt an Ethylenoxid von mindestens 70 Gew.-%, umgesetzt wird.

Zur Herstellung der Vernetzerkomponente B) wird das Polyisocyanat nacheinander in beliebiger Reihenfolge oder gleichzeitig mit dem Blockierungsmittel und/oder der Hydroxycarbonsäure und/oder dem Polyether umgesetzt. Vorzugsweise werden die Polyisocyanate nicht hydrophiliert sondern nur blockiert. Es kann hierbei sowohl ein geringer Überschuß als auch ein geringer Unterschuß an Blockierungsmittel zum Einsatz gelangen. Es kann aber auch weitergearbeitet werden, wenn noch kleine Anteile an nicht umgesetzten Isocyanatgruppen im Reaktionsgemisch vorhanden sind. Die Umsetzungen erfolgen bei 0 bis 120°C, vorzugsweise bei 20 bis 120°C, wobei besonders die Umsetzungen mit Hydroxycarbonsäuren unter milden Bedingungen durchgeführt werden, um zu verhindern, daß auch die Carboxylgruppe mit den Isocyanatgruppen reagiert.

Die Umsetzungen können lösemittelfrei oder in einem inerten Lösemittel durchgeführt werden. Bevorzugt ist die Umsetzung in inerten Lösemitteln, wobei vorzugsweise die zuvor genannten Lösemittel zur Anwendung gelangen, insbesondere Ethylacetat, Aceton und Methylethylketon.

Nach beendeter Umsetzung erfolgt, falls eine Hydrophilierung mit einer Carbonsäure stattgefünden hat, gegebenenfalls zumindests teilweise eine Neutralisation der eingebauten Carboxylgruppen mit einem Neutralisationsmittel. Geeignete Neutralisationsmittel sind Alkali- oder Erdalkalihydroxide, bevorzugt aber Ammoniak und Amine, wie z.B. Triethylamin, Triethanolamin, N-Methylmorpholin, Triethanolamin und besonders bevorzugt N,N-Dimethylethanolamin. Im allgemeinen werden die gegebenenfalls vorliegenden Carboxylgruppen zumindest zu 50% neutralisiert, wobei gegebenenfalls auch ein Überschuß an Neutralisationsmittel zum Einsatz kommen kann.

Bei den gegebenenfalls zur Anwendung kommenden weiteren Polyolen C) handelt es sich um Substanzen mit mindestens einer Hydroxylgruppe, wie z.B. die bei der Herstellung der Polyesterpolyole schon beschriebenen niedermolekularen Alkohole, weiterhin Polyetheralkohole mit 1 bis 6 Hydroxylendgruppen, Polyurethanpolyole mit mindestens einer Hydroxylendgruppe, ε-Caprolactonpolyester mit mindestens einer Hydroxylendgruppe und/oder Carbonatgruppen aufweisende Polyole mit mindestens einer Hydroxylendgruppe.

Bei der gegebenenfalls zum Einsatz kommenden zusätzlichen Vernetzerkomponente D) handelt es sich um Substanzen, die wie die Vernetzersubstanzen B) durch chemische Reaktion mit den Hydroxylgruppen der Komponente A) zu einer Aushärtung der erfindungsgemäßen Überzüge führen. Beispielhaft zu nennen sind Aminoplastharze, z.B. entsprechende Melamin-Derivate, wie alkoxylierte Melaminharze oder Melamin-Formaldehvd-Kondensationsprodukte (z.B. FR-A 943 411. "The Chemistry of Organic Filmformers", Seiten 235 bis 240, John Wiley & Sons Inc., New York 1974) und übliche Vernetzungsmittel, z.B. mit alkoholischen Hydroxylgruppen reaktionsfähige Epoxide, Phenolplastharze, Resolharze, Harnstoffharze oder Guanidinharze bzw. deren Gemische.

Zur Herstellung der erfindungsgemäßen Beschichtungsmittel werden die beschriebenen Komponenten A), B) und gegebenenfalls C) bis F) miteinander gemischt, vorzugsweise in Lösemitteln, die durch Vakuumdestillation aus der wäßrigen Phase einer Dispersion entfernt werden können. Beispielhaft genannt seien Ketone wie Aceton und Methylethylketon und Ester wie Ethylacetat und Butylacetat, bevorzugt sind Ethylacetat und Methylethylketon, besonders bevorzugt ist Methylethylketon. Selbstverständlich können auch die Komponenten A) und B) direkt in Lösung hergestellt werden und anschließend diese Lösungen vermischt werden. Besonders bevorzugt werden die Komponenten A) und B) in Methylethylketon hergestellt und dann vermischt.

In diese Lösung von A) und B) können, falls erforderlich und noch nicht vorher geschehen, gegebenenfalls weitere polyfunktionelle Vernetzersubstanzen, Neutralisationsmittel, geringe Menge externer Emulgatoren sowie weitere Hilfs- und Zusatzstoffe, wie z.B. Verdickungsmittel, Verlaufsmittel, Lichtschutzmittel und/oder Katalysatoren, eingebracht werden. Danach erfolgt die Vermischung der organischen Lösung mit Wasser zur Herstellung der wäßrigen Suspensionen. Dies geschieht entweder nach dem Direktdispergierverfahren, wobei die organische Phase in die wäßrige Phase dispergiert wird, oder nach dem Phasenumkehrverfahren, wobei eine zunächst vorliegende Wasser-in-Öl-Emulsion in eine Öl-in-Wasser-Emulsion überführt wird unter Zuhilfenahme einer Dispergiervorrichtung mit hoher volumenbezogener Dispergierleistung. Dabei kann es sich z.B handeln um Käfigrührer, Dissolver, Rotor/Stator-Mischer, Druckentspannungsdüsen, bevorzugt Strahldispergatoren, wobei die volumenbezogene Dispergierleistung für den Dispergierprozeß bei 1 x 10 bis 9,8 x 10000 W/cm³, vorzugsweise 1 x 10 bis 1 x 10000 W/cm³ und besonders bevorzugt 1 x 10 bis 1 x 1000 W/cm³ liegt Die mittlere Teilchengröße der Partikel der wäßrigen Dispersionen bzw. Suspensionen liegt bei 0,05 bis 10 µm, vorzugsweise 0,1 bis 5 µ, insbesondere 0,15 bis 2,5 µm und besonders bevorzugt 0,2 bis 1,5 µm.

Um spezielle Teilchengrößenverteilungen zu erhalten kann es sinnvoll bzw. vorteilhaft sein, in mehreren Stufen bei definierter volumenbezogener Leistung zu dispergieren.

Es kann sich als vorteilhaft erweisen, vor dem Dispergiervorgang durch den Strahldispergator erst eine Voremulsion mittels eines Rührers oder Dissolvers herzustellen und diese Voremulsion dann dem Strahldispergator zuzuführen. Bei der Herstellung der Dispersionen bzw. Emulsionen wird eine solche Menge Wasser verwendet, daß 20 bis 60 gew.-%ige, vorzugsweise 30 bis 60 gew.-%ige und besonders bevorzugt 35 bis 60 gew.-%ige Dispersionen bzw. Emulsionen der erfindungsgemäßen Beschichtungsmittel resultieren. Nach beendeter Wasserzugabe wird das Lösemittel vorzugsweise im Vakuum destillativ entfernt.

Die Dispergierung kann in einem breiten Temperaturbereich sowohl bei tiefer Temperatur, z.B. 0 bis 20°C, als auch bei höherer Temperatur bis deutlich oberhalb des Schmelzpunktes der Polymermischung, z.B. 100 bis 150°C, erfolgen.

Grundsätzlich möglich wäre jedoch auch eine Vorgehensweise zur Herstellung der wäßrigen Dispersionen bzw. Suspensionen, die darin besteht, freie Carboxyl- und Hydroxylgruppen und blockierte Isocyanatgruppen aufweisende Mischungen von A) und B), gegebenenfalls in Form einer organischen Lösung in einem der beispielhaft genannten Lösemittel, mit einer wäßrigen Lösung eines Neutralisationsmittels der genannten Art zu vermischen, so daß Neutralisation und Löse- bzw. Dispergiervorgang einstufig erfolgen.

Das Mischungsverhältnis der Polyhydroxylkomponente A) zu der blockierten Polyisocyanatkomponente B) wird so gewählt, daß das Äquivalentverhältnis von blockierten Isocyanatgruppen der Komponente B) zu alkoholischen Hydroxylgruppen der Komponente A) bei 0,5:1 bis 2:1, vorzugsweise bei 0,7:1 bis 1,5:1 und besonders bevorzugt bei 0,8:1 bis 1,2:1 liegt.

Weitere polyfünktionelle Hydroxylverbindungen C), polyfunktionelle Vernetzer D), externe Emulgatoren E) und übliche Zusatzmittel F) können dem wäßrigen Bindemittelgemisch aber auch den Einzelkomponenten A) und B) vor der Vereinigung bzw. schon bei der Herstellung oder der Mischung aus A) und B) vor oder nach der Dispergierung zugegeben werden.

Die auf diese Weise hergestellten erfindungsgemäßen Überzugsmittel können nach an sich bekannten Methoden, beispielsweise durch Spritzen, Streichen, Tauchen, Fluten, Gießen oder mit Hilfe von Walzen oder Rakeln auf beliebige, hitzeresistente Substrate ein- oder mehrschichtig appliziert werden.

Es werden Überzüge beispielsweise auf Metall, Kunststoff, Holz oder Glas durch Aushärten der Beschichtung bei 80 bis 220°C, vorzugsweise bei 90 bis 180°C und besonders bevorzugt bei 100 bis 160°C erhalten.

Die erfindungsgemäßen Bindemittel eignen sich vorzugsweise zur Herstellung von Überzügen und Lackierungen auf gegebenenfalls zuvor grundierten und gegebenenfalls mit einer Füller- und Basislackierung versehenen Stahlblechen oder anderen Metallblechen, wie sie beispielsweise zur Herstellung von Fahrzeug- oder Flugzeugteilen, Maschinen, Fässern, Verkleidungen oder Containern Verwendung finden. Die Lackfilme haben im allgemeinen eine Trockenschichtdicke von 0,01 bis 0,3 mm.

Vorteilhaft im Vergleich zu Lösemittelsystemen ist der deutlich geringere Lösemittelgehalt zu nennen. Im Vergleich zu herkömmlichen Wasserlacken ist der deutlich geringere Gehalt an organischen Colösern und die größere Applikationssicherheit durch das größere Applikationsfenster von Vorteil. Zusätzlich ist die wesentlich geringere Kocherneigung und bessere Ablaufstabilität erwähnenswert.

Im Vergleich zu herkömmlichen Pulverlacken ist der gute Verlauf bei deutlich geringerer Schichtstärke zu nennen, die Applikation auf bestehenden IK-Naßlack-Anlagen ist möglich, die Anlagenreinigung ist einfacher, und es treten keine Störungen auf der Lackierstraße durch vagabundierende Feinpulver auf.

### Beispiele

### Allgemeine Arbeitsvorschrift zur Herstellung eines Polyester-Polyacrylatpolyols bzw. Polyacrylatpolyols

### Polyolkomponente A)

In einem 10 l Edelstahldruckreaktor mit Rühr-, Kühl- und Heizvorrichtung sowie elektronischer Temperatursteuerung wird Teil I vorgelegt und auf Reaktionstemperatur aufgeheizt. Dann werden in den geschlossenen Reaktor gleichzeitig beginnend Teil II (Zugabe über einen Zeitraum von insgesamt 3 Stunden) und Teil III (Zugabe über einen Zeitraum von insgesamt 3,5 Stunden) bei nahezu konstanter Temperatur (± 2°C) des Reaktorinhalts zudosiert. Nach Zugabe von Teil III wird 1 Stunde bei der Polymerisationstemperatur nachgerührt. Dann wird die entstandene Harzlösung auf 30°C abgekühlt und filtriert.

Die Reaktionstemperaturen und die Zusammensetzungen der Teile bis III sind in Tabelle 1 zusammen mit den Kenndaten der erhaltenen Produkte aufgeführt.

### Ausgangsmaterial

Polyester : Polyesterpolyol der Hydroxylzahl 98 mg KOH/g und der Säurezahl 1,5 mg KOH/g, hergestellt durch Umsetzung von 22,07 Gew.-Teilen 2-Ethylhexansäure, 30,29 Gew.-Teilen Trimethylolpropan, 12,67 Gew.-Teilen Neopentylglykol, 32,24 Gew.-Teilen Hexahydrophthalsäureanhydrid und 12,29 Gew.-Teilen Adipinsäure.

**Tabelle 1**

| Polyole A) der erfindungsgemäßen Beschichtungsmittel (Mengenangaben in g) | | |
|---|---|---|
| **Copolymerisat** | **A1** | **A2** |
| Teil I | | |
| Methylethylketon | 2000 | 2000 |
| Polyester | 568 | - |
| Maleinsäuredimethylester | 284 | - |

| Teil II | | |
|---|---|---|
| Methylmethacrylat | 1136 | 1136 |
| Styrol | 2037 | 1673 |
| Hydroxyethylmethacrylat | 922 | 1735 |
| Butylmethacrylat | 568 | - |
| Butylacrylat | - | 852 |
| Acrylsäure | 51 | 57 |

| Teil III | | |
|---|---|---|
| Di-tert.-butylperoxid | 114 | 227 |
| Methylethylketon | 320 | 320 |
| | | |
| Polymerisationstemperatur | 160°C | 160°C |
| | | |

| Kenndaten | | |
|---|---|---|
| Festgehalt (%) | 70 | 69,6 |
| Viskosität bei 23°C, mPa.s | 1920 | 998 |
| Säurezahl, mg KOH/g | 5,8 | 7,6 |
| OH-Zahl, mg KOH/g | 57 | 92 |
| Farbzahl, APHA | 40 | 31 |

### Herstellung der Vernetzerkomponente B)

### Polyisocyanat 1

In einem 2 I-Vierhalskolben mit Rührer, Gaseinleitungsrohr, Innenthermometer, Tropftrichter und Rückflußkühler, werden 1332 g Isophorondiisocyanat (IPDI) unter Stickstoff vorgelegt und auf 70°C erwärmt. Aus einem Tropftrichter werden innerhalb von 45 Minuten 15 ml einer 5 gew.-%igen Lösung von 2-Hydroxypropyltrimethylammoniumhydroxid in 2-Ethyl-1,3-hexandiol/Methanol (6:1 Gew.-Teile) langsam und gleichmäßig zugetropft. Hierbei steigt die Temperatur auf 88°C (90°C sollten nicht überschritten werden, weil die Trimerisierung bei zu hohen Temperaturen unspezifisch verläuft und zu höheren Viskositäten des Endprodukts führt). Es wird nach Beendigung des Zutropfens so lange bei 80°C gerührt, bis die Reaktionsmischung einen NCO-Gehalt von 30,6 % erreicht hat. Dann stoppt man durch Zugabe von 0,36 g (70 ppm molar) einer 25 %igen Lösung von Dibutylphosphat in IPDI ab. Überschüssiges monomeres IPDI wird durch Dünnschichtdestillation entfernt. Man erhält ein nahezu farbloses, klares Harz mit einer Ausbeute von 44 %, das 70 %ig in Methylethylketon gelöst wird. Die Viskosität der Lösung bei 23°C liegt bei 300 mPa.s, der Isocyanatgehalt beträgt 11,8 % und der Gehalt an freiem, monomerem IPDI liegt bei 0,18 %.

### Polyisocyanat 2

®Desmodur N 3300 (Bayer AG), Festgehalt: 100%; Viskosität bei 23°C: 3500 mPa.s; Isocyanatgehalt 21,8 %.

### Herstellung eines blockierten Polyisocyanats B1

500 g Polyisocyanat 1 werden in einem 1 l-Dreihalskolben mit Rührer, Innenthermometer und Rückflußkühler vorgelegt und auf 60°C erwärmt. 134,8 g 3,5-Dimethylpyrazol werden unter Rühren portionsweise zugegeben und dann so lange bei 60°C gerührt, bis im IR-Spektrum keine Isocyanatbande mehr zu sehen ist.

### Herstellung eines blockierten Polyisocyanats B2

350 g Desmodur N 3300 werden in einem 1 l-Dreihalskolben mit Rührer, Innenthermometer und Rückflußkühler mit 150 g Methylethylketon versetzt und unter Rühren auf 50°C aufgeheizt. Dann werden 174,4 g 3,5-Dimethylpyrazol portionsweise zugegeben und bei 50°C so lange gerührt, bis im IR-Spektrum keine Isocyanatbande mehr zu sehen ist.

### Herstellung von vorzugsweise pulverförmig auftrocknenden wäßrigen Dispersionen

### Dispersion 1

701,6 g des Polyesterpolyacrylatpolyols A1 und 453,4 g des blockierten Polyisocyanats B1 werden in 1464,4 g Methylethylketon (MEK) gelöst und mit 7,1 g des Neutralisationsmittels Dimethylethanolamin versetzt. Anschließend werden folgende Additiv-Mengen zugegeben: 6,5 g Byk 348 (Verlaufsmittel, Fa. Byk-Chemie) und 10,5 g Emulgator WN (Emulgierhilfsmittel, Fa. Bayer AG).

Aus 2654 g der Lösung aus Bindemittel, Neutralisationsmittel und Additive in MEK wird durch intensives Vermischen mit 1613,2 g Wasser mittels eines Disssolvers eine Wasser-in-Öl-Emulsion hergestellt, die anschließend durch Passage durch einen Strahldispergator bei erhöhtem Druck (0,5 bar) gemäß EP 0 101 007 eine Phasenumkehr in eine Öl-in-Wasser-Emulsion erfährt. Das MEK wird im Vakuum abdestilliert und mit 10,5 g Emulgator WN nachstabilisiert. Es resultiert eine Polymerdispersion mit folgenden Kenndaten:

| | |
|---|---|
| Auslaufzeit (ISO 4-Becher, 23°C) | 15 sec |
| Festkörpergehalt | 50 % |
| mittlere Teilchengröße (Laser-Korrelation-Spektroskopie) | 0,90 µm |
| Glasübergangstemperatur | 62°C |

### Dispersion 2

1337,6 g des Polyacrylatpolyols A2 und 1051,9 g des blockierten Polyisocyanats B1 werden in 2033 g Methylethylketon (MEK) gelöst und mit 11,7 g des Neutralisationsmittels Dimethylethanolamin versetzt. Anschließend werden folgende Additiv-Mengen zugegeben: 17,4 g Byk 348 (Verlaufsmittel, Fa. Byk-chemie) und 52,3 g Emulgator NP 30 (Emulgierhilfsmittel, Fa. Bayer AG).

Aus 4000 g der Lösung aus Bindemittel, Neutralisationsmittel und Additive in MEK wird durch intensives Vermischen mit 2154 g Wasser mittels eines Dissolvers eine Wasser-inÖl-Emulsion hergestellt, die anschließend durch Passage durch einen Strahldispergator bei erhötem Druck (1,0 bar) gemäß EP 0 101 007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 15 sec |
| Festkörpergehalt | 49,7 % |
| mittlere Teilchengröße (Laser-Korrelation-Spektroskopie) | 0,51 µm |
| Glasübergangstemperatur | 56°C |

### Dispersion 3

1812 g des Polyacrylatpolyols A2 911,4 g des blockierten Polyisocyanats B1 und 372,1 des blockierten Polyisocyanats B2 werden in 2620 Methylethylketon (MEK) gelöst und mit 16,0 g des Neutralisationsmittels Dimethylethanolamin versetzt. Anschließend werden folgende Additiv-Mengen zugegeben: 22,4 g Byk 348 (Verlaufsmittel, Fa. Byk-Chemie) und 67,4 g Emulgator WN (Emulgierhilfsmittel, Fa. Bayer AG).

Aus 5000 g der Lösung aus Bindemittel, Neutralisationsmittel und Additive in MEK wird durch intensives Vermischen mit 2618 g Wasser mittels eines Dissolvers eine Wasser-in-Öl-Emulsion hergestellt, die anschließend durch Passage durch einen Strahldispergator bei erhöhtem Druck (1,0 bar) gemäß EP 0 101 007 eine Phasenumkehr in eine Öl-in-Wasser-Emulsion erfährt. Das MEK wird im Vakuum abdestilliert. Anschließend wird durch ein Filter mit der Maschenweite 10 µm filtriert. Es resultiert eine Polymerdispersion mit folgenden Kenndaten:

| | |
|---|---|
| Auslaufzeit (ISO 4-Becher, 23°C) | 15 sec |
| Festkörpergehalt | 50,6 % |
| mittlere Teilchengröße (Laser-Korrelation-Spektroskopie) | 0,33 µm |
| Glasübergangstemperatur | 45°C |

### Applikation und Eigenschaften

Es werden beispielhaft die Applikation und Filmeigenschaften von Klarlacken beschrieben.

Die Lackdispersionen 1 bis 3 werden mit folgenden Additiven versetzt und auf Applikationsviskosität eingestellt:

| Additiv | Gew.-% fest auf fest |
|---|---|
| Byk 348 (Verlaufsmittel der BYK-Chemie) | 1,5 |
| Tinuvin 292 (Lichtschutzmittel der Ciba-Geigy, Basel, 50 %ig in Butyldiglykolacetat) | 1,0 |
| Tinuvin 384 (UV-Absorber der Ciba-Geigy, Basel, 50 %ig in Butyldiglykolacetat) | 1,5 |
| Borchigel LW 44 (Verdickungsmittel der Borchers GmbH, 10 %ig in Wasser) | 0,25 |

Werden die so formulierten Lackdispersionen 1 bis 3 auf eine Oberfläche appliziert und bei Raumtemperatur getrocknet, so bildet sich eine pulverförmige Oberfläche, die mit Wasser leicht zu entfernen ist.

Werden die wäßrigen Dispersionen unmittelbar nach der Applikation eingebrannt, so entsteht ein hochglänzender Lackfilm mit gutem Lackverlauf und guten Beständigkeitseigenschaften gegen Wasser, organische Lösemittel und Chemikalien.

Die Applikation der fertigen Klarlacke erfolgte mittels einer handelsüblichen Air-Mix-Spritzpistole auf ein Blech, das mit einer wäßrigen kathodischen Tauchlackierung, einer wäßrigen Füllerschicht und einer wäßrigen schwarzen Basislackschicht, wie sie bei der Autoerstlackierung üblicherweise eingesetzt werden, vorbeschichtet war.

Nach der Applikation wird 2 Minuten bei Raumtemperatur abgelüftet, dann werden die Bleche sofort bei 150°C 30 Minuten gehärtet. Die Lackeigenschaften des Klarlackfilms auf Basis der Dispersionen 1 bis 3 sind in der nachfolgenden Tabelle 2 aufgeführt.

| **Klarlack auf Basis der Dispersion** | | **1** | **2** | **3** |
|---|---|---|---|---|
| Schichtstärke, µm | | 40 | 35 | 30 |
| Pendeldämpfung nach König, s | | 223 | 216 | 204 |
| Glanz, <20° | | 91 | 84 | 86 |
| Wasserbeständigkeit, 24 Stunden bei 23°C¹⁾ | | o.B. | o.B. | o.B. |
| Anlösbarkeit²⁾, | Xylol | 0 | 0 | 0 |
| 1 Minute Einwirkung | MPa | 0 | 0 | 0 |
| | Ethylacetat | 2 | 0 | 1 |
| | Aceton | 2 | 2 | 1 |
| Chemikalienbeständigkeit³⁾ Natronlauge, 1 %ig | | 50/50 | 60/60 | 51/60 |
| Quellung/Anätzung, °C Schwefelsäure, 1 %ig | | 44/48 | 51/60 | 48/51 |

| | | | | |
|---|---|---|---|---|
| ¹⁾ o.B. = ohne Befund | | | | |
| ²⁾ 0 = bester Wert (ohne Befund), 5 = schlechtester Wert (Film aufgelöst) | | | | |
| ³⁾ Gradientenofenmethode: Die Lackoberfläche wird mit der angegebenen Substanz bei unterschiedlichen Temperaturen im Gradientenofen (Fa. Byk-Gardner) 30 Minuten lang belastet. Die Lackoberfläche wird danach gereinigt und anschließend visuell begutachtet. Die Beschädigung wird in °C angegeben. Erster Wert: Erste sichtbare Veränderung durch Anquellung. Zweiter Wert: Erste sichtbare Veränderung durch Anätzung | | | | |

## Patentansprüche

1. Verfahren zur Herstellung wässriger Beschichtungsmittel durch Kombination
A) einer Polyolkomponente auf Basis von Polyesterpolyolen, Polyacrylatpolyolen und/oder Polyesterpolyacrylatpolyolen mit einem Hydroxylgruppengehalt von 1,0 bis 6,0 Gew.-%, einem Carboxylgruppengehalt von 0 bis 1,5 Gew.-%, einem gewichtsgemittelten Molekulargewicht von 2000 bis 50000 und einer Glasübergangstemperatur ≥30°C,
B) einer Polyisocyanatkomponente mit blockierten Isocyanatgruppen auf Basis von (cyclo)aliphatischen Polyisocyanaten mit einem Gehalt an blockierten Isocyanatgruppen von 10,0 bis 25,0 Gew.-%,
C) gegebenenfalls weiteren polyfunktionellen Polyolen,
D) gegebenenfalls weiteren Vernetzersubstanzen,
E) gegebenenfalls externen Emulgatoren und
F) gegebenenfalls üblichen Zusatzmitteln, wie z.B. Neutralisationsmittel, Katalysatoren, Hilfsstoffe und/oder Additive, wie Entgasungsmittel, Verlaufsmittel, Radikalfänger, Antioxidantien und/oder UV-Absorber, Verdicker, geringe Anteile an Lösemitteln und Bioziden,
in wässriger Dispersion entweder nach einem Direktdispergierverfahren oder nach dem Phasenumkehrverfahren mittels einer Dispergiervorrichtung mit einer volumenbezogenen Dispergierleistung von 1 x 10 bis 9,8 x 10000 W/cm³.

2. Verfahren zur Herstellung des Beschichtungsmittels gemäß Anspruch 1, **dadurch gekennzeichnet, dass** die Komponente A) einen Hydroxylgruppengehalt von 1 bis 6 Gew.-%, einen Carboxylgruppengehalt von 0 bis 1,5 Gew.-%, ein gewichtsgemitteltes Molekulargewicht (Standard Polystyrol) von 2000 bis 50000 und eine Glasübergangstemperatur von ≥30°C aufweist und besteht aus
a) 0 bis 100 Gew.-Teilen einer Polyesterkomponente, bestehend aus mindestens einem Polyesterpolyol mit einer Hydroxylzahl von 20 bis 240 mg KOH/g bei einer Säurezahl von <12 mg KOH/g und einer Glasübergangstemperatur von -40 bis +80°C,
b) 0 bis 15 Gew.-Teilen einer olefinisch ungesättigten Esterkomponente, bestehend aus mindestens einem Maleinsäuredi(cyclo)alkylester mit 1 bis 12 Kohlenstoffatomen im (Cyclo)alkylrest,
c) 0 bis 70 Gew.-Teilen (Cyclo)alkylester der Acryl- und/oder Methacrylsäure mit 1 bis 18 Kohlenstoffatomen im (Cyclo)alkylrest,
d) 0 bis 50 Gew.-Teilen aromatischen, olefinisch ungesättigten Monomeren,
e) 0 bis 50 Gew.-Teilen Hydroxyalkylester der Acryl- und/oder Methacrylsäure mit 2 bis 6 Kohlenstoffatomen im Hydroxyalkylrest und/oder deren Umsetzungsprodukte eines maximalen Molekulargewichts von 500 mit ε-Caprolacton sowie Additionsprodukten von Acryl- und/oder Methacrylsäure und Monoepoxidverbindungen, die auch während der radikalischen Polymerisation in situ erzeugt werden können,
f) 0 bis 5 Gew.-Teilen olefinisch ungesättigten Carbonsäuren und
g) 0 bis 30 Gew.-Teilen weiteren copolymerisierbaren, olefinisch ungesättigten Verbindungen,
wobei die Summe der Gew.-Teile der Komponenten a) bis g) 100 ergibt.

3. Verfahren zur Herstellung des Beschichtungsmittels gemäß Anspruch 1, **dadurch gekennzeichnet, dass** die Komponente B) besteht aus blockierten (cyclo)aliphatischen Isocyanuratgruppen und gegebenenfalls Iminooxadiazindiongruppen und/oder Biuretgruppen enthaltenden, sowie gegebenenfalls Urethan- und/oder Allophanatgruppen aufweisenden Polyisocyanaten.

4. Verfahren zur Herstellung des Beschichtungsmittels gemäß Anspruch 1, **dadurch gekennzeichnet, dass** es bei Raumtemperatur (23°C) pulverförmig auftrocknet.

5. Verfahren zur Herstellung des Beschichtungsmittels gemäß Anspruch 1, **dadurch gekennzeichnet, dass** der Dispergierschritt nach dem Direktdispergierverfahren erfolgt, wobei die organische Phase in die wässrige Phase dispergiert wird.

6. Verfahren zur Herstellung des Beschichtungsmittels gemäß Anspruch 1, **dadurch gekennzeichnet, dass** der Dispergierschritt nach dem Phasenumkehrverfahren erfolgt, wobei eine Wasser-in-Öl-Emulsion in eine Öl-in-Wasser-Emulsion überführt wird.

7. Verfahren zur Herstellung des Beschichtungsmittels gemäß Anspruch 1, **dadurch gekennzeichnet, dass** der Dispergierschritt in einer Druckentspannungshomogenisierdüse erfolgt.

## Claims

1. Process for the production of aqueous coating compositions by combining
A) a polyol component based on polyester polyols, polyacrylate polyols and/or polyester/polyacrylate polyols having a hydroxyl group content of 1.0 to 6.0 wt.%, a carboxyl group content of 0 to 1.5 wt.%, a weight average molecular weight of 2000 to 50000 and a glass transition temperature of ≥30°C,
B) a polyisocyanate component having blocked isocyanate groups and based on (cyclo)aliphatic polyisocyanates having a blocked isocyanate group content of 10.0 to 25.0 wt.%,
C) optionally further polyfunctional polyols,
D) optionally further crosslinking substances,
E) optionally external emulsifiers and
F) optionally conventional added components, such as for example neutralising agents, catalysts, auxiliary substances and/or additives, such as degassing agents, levelling agents, free-radical scavengers, antioxidants and/or UV absorbers, thickeners, small proportions of solvents and biocides,
in an aqueous dispersion, either using a direct dispersion process or using the phase inversion process by means of a dispersion device having a dispersing power per unit volume of 1×10 to 9.8×10000 W/cm³.

2. Process for the production of the coating composition according to claim 1, **characterised in that** component A) has a hydroxyl group content of 1 to 6 wt.%, a carboxyl group content of 0 to 1.5 wt.%, a weight average molecular weight (polystyrene standard) of 2000 to 50000 and a glass transition temperature of ≥30°C and consists of
a) 0 to 100 parts by weight of a polyester component consisting of at least one polyester polyol having a hydroxyl value of 20 to 240 mg of KOH/g at an acid value of <12 mg of KOH/g and a glass transition temperature of -40 to +80°C,
b) 0 to 15 parts by weight of an olefinically unsaturated ester component consisting of at least one maleic acid di(cyclo)alkyl ester having 1 to 12 carbon atoms in the (cyclo)alkyl residue,
c) 0 to 70 parts by weight of (cyclo)alkyl esters of acrylic and/or methacrylic acid having 1 to 18 carbon atoms in the (cyclo)alkyl residue,
d) 0 to 50 parts by weight of aromatic, olefinically unsaturated monomers,
e) 0 to 50 parts by weight of hydroxyalkyl esters of acrylic and/or methacrylic acid having 2 to 6 carbon atoms in the hydroxyalkyl residue and/or the reaction products thereof of a maximum molecular weight of 500 with ε-caprolactone together with addition products of acrylic and/or methacrylic acid and monoepoxy compounds, which may also be produced *in situ* during free-radical polymerisation,
f) 0 to 5 parts by weight of olefinically unsaturated carboxylic acids and
g) 0 to 30 parts by weight of further copolymerisable, olefinically unsaturated compounds,
wherein the sum of parts by weight of components a) to g) is 100.

3. Coating composition according to claim 1, **characterised in that** component B) consists of polyisocyanates containing blocked (cyclo)aliphatic isocyanurate groups and optionally iminooxadiazinedione groups and/or biuret groups, optionally together with urethane and/or allophanate groups.

4. Process for the production of the coating composition according to claim 1, **characterised in that** it dries as a powder at room temperature (23°C).

5. Process for the production of the coating composition according to claim 1, **characterised in that** the dispersion stage is performed using the direct dispersion process, wherein the organic phase is dispersed in the aqueous phase.

6. Process for the production of the coating composition according to claim 1, **characterised in that** the dispersion stage is performed using the phase inversion process, wherein a water-in-oil emulsion is converted into an oil-in-water emulsion.

7. Process for the production of the coating composition according to claim 1, **characterised in that** the dispersion stage is performed in a flash homogenising nozzle.

## Revendications

1. Procédé de préparation d'une composition de revêtement aqueuse par combinaison :
A) d'un composant polyol à base de polyesterpolyols, polyacrylate-polyols et/ou polyesterpolyacrylate-polyols avec une teneur en radicaux hydroxyle allant de 1,0 à 6,0% en poids, une teneur en radicaux carboxyle allant de 0 à 1,5% en poids, un poids moléculaire moyen en poids allant de 2000 à 50 000 et une température de transition vitreuse ≥ 30°C ;
B) un composant polyisocyanate avec des radicaux isocyanate bloqués, à base de polyisocyanates (cyclo)aliphatiques, avec une teneur en radicaux isocyanate bloqués allant de 10,0 à 25,0% en poids ;
C) le cas échéant, d'autres polyols polyfonctionnels ;
D) le cas échéant, d'autres substances de réticulation ;
E) le cas échéant, un émulsionnant externe, et
F) le cas échéant, les adjuvants usuels, comme par exemple des agents de neutralisation, des catalyseurs, des auxiliaires et/ou additifs, comme des agents de dégazage, des agents nivelants, des pièges de radicaux, des antioxydants et/ou agents absorbant les UV, des épaississants, de faibles quantités de solvants et biocides,
dans une dispersion aqueuse par un procédé de dispersion directe ou par un procédé d'inversion de phase à l'aide d'un dispositif de dispersion avec une puissance de dispersion volumique allant de 1 x 10 à 9,8 x 10 000 W/cm³.

2. Procédé de préparation de la composition de revêtement suivant la revendication 1, **caractérisé en ce que** le composant A) présente une teneur en radicaux hydroxyle allant de 1 à 6% en poids, une teneur en radicaux carboxyle allant de 0 à 1,5% en poids, un poids moléculaire moyen en poids (polystyrène comme standard) allant de 2000 à 50 000 et une température de transition vitreuse ≥ 30°C, et consiste en :
a) 0 à 100 parties en poids d'un composant polyester, consistant en au moins un polyester-polyol avec un indice hydroxyle allant de 20 à 240 mg KOH/g pour un indice d'acide < 12 mg KOH/g et une température de transition vitreuse allant de -40 à +80°C ;
b) 0 à 15 parties en poids d'un composant ester oléfiniquement insaturé, consistant en au moins un diester (cyclo)alcoylique de l'acide maléique, ayant 1 à 12 atomes de carbone dans le reste (cyclo)alcoyle ;
c) 0 à 70 parties en poids d'ester (cyclo)alcoylique de l'acide acrylique et/ou méthacrylique, ayant 1 à 18 atomes de carbone dans le reste (cyclo)alcoyle ;
d) 0 à 50 parties en poids de monomères aromatiques, oléfiniquement insaturés ;
e) 0 à 50 parties en poids d'ester hydroxyalcoylique de l'acide acrylique et/ou méthacrylique, ayant 2 à 6 atomes de carbone dans le reste hydroxyalcoyle et/ou ses produits de réaction d'un poids moléculaire maximal de 500, avec l'ε-caprolactone, ainsi que les produits d'addition des acides acrylique et/ou méthacrylique et de composés monoépoxyde, qui peuvent également être produits in situ, pendant la polymérisation radicalaire ;
f) 0 à 5 parties en poids d'acides carboxyliques oléfiniquement insaturés, et
g) 0 à 30 parties en poids d'autres composés copolymérisables, oléfiniquement insaturés,
où la somme des parties en poids des composants a) à g) fait 100.

3. Procédé de préparation d'une composition de revêtement suivant la revendication 1, **caractérisé en ce que** le composant B) consiste en des polyisocyanates contenant des radicaux isocyanurate (cyclo)aliphatiques bloqués et le cas échéant, des radicaux iminoxadiazinedione et/ou des radicaux biuret, ainsi que le cas échéant, présentant des radicaux uréthanne et/ou allophanate.

4. Procédé de préparation d'une composition de revêtement suivant la revendication 1, **caractérisé en ce qu'**on l'applique à sec sous forme de poudre, à la température ambiante (23°C).

5. Procédé de préparation d'une composition de revêtement suivant la revendication 1, **caractérisé en ce que** l'étape de dispersion est réalisée d'après le procédé par dispersion directe, où la phase organique est dispersée dans la phase aqueuse.

6. Procédé de préparation d'une composition de revêtement suivant la revendication 1, **caractérisé en ce que** l'étape de dispersion est réalisée d'après le procédé par inversion de phase, où une émulsion eau-dans-huile est convertie en une émulsion huile-dans-eau.

7. Procédé de préparation d'une composition de revêtement suivant la revendication 1, **caractérisé en ce que** l'étape de dispersion est réalisée dans une buse d'homogénéisation à détente.
